(19) Europäisches Patentamt
European Patent Office
Office européen des brevets

(11) **EP 3 560 650 B1**

(12) **EUROPEAN PATENT SPECIFICATION**

(45) Date of publication and mention
of the grant of the patent:
**13.05.2020 Bulletin 2020/20**

(21) Application number: **18833595.4**

(22) Date of filing: **02.03.2018**

(51) Int Cl.:
*B23K 26/342* (2014.01)     *B22F 3/105* (2006.01)
*B22F 3/16* (2006.01)     *B23K 15/00* (2006.01)
*B33Y 10/00* (2015.01)     *B33Y 30/00* (2015.01)
*B33Y 50/02* (2015.01)     *B29C 64/10* (2017.01)
*B29C 64/20* (2017.01)     *B29C 64/393* (2017.01)

(86) International application number:
**PCT/JP2018/008111**

(87) International publication number:
**WO 2019/167274 (06.09.2019 Gazette 2019/36)**

(54) **ADDITIVE MANUFACTURING APPARATUS AND ADDITIVE MANUFACTURING METHOD**

VORRICHTUNG ZUR GENERATIVEN FERTIGUNG UND VERFAHREN ZUR GENERATIVEN FERTIGUNG

APPAREIL DE FABRICATION ADDITIVE ET PROCÉDÉ DE FABRICATION ADDITIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.10.2019 Bulletin 2019/44**

(73) Proprietor: **Mitsubishi Electric Corporation Tokyo 100-8310 (JP)**

(72) Inventors:
• **KATOGI, Hidetaka**
 **Tokyo**
 **1008310 (JP)**

• **NAKANO, Yoshikazu**
 **Tokyo**
 **1008310 (JP)**

(74) Representative: **Diehl & Partner GbR Patentanwälte Erika-Mann-Strasse 9 80636 München (DE)**

(56) References cited:
**JP-A- H04 336 304     JP-A- 2014 512 961
JP-B2- 5 959 849     US-A1- 2013 105 447
US-A1- 2016 089 754**

EP 3 560 650 B1

## Description

Field

The present invention relates to an additive manufacturing apparatus and an additive manufacturing method for manufacturing a three-dimensional object.

Background

Additive manufacturing apparatuses for manufacturing a three-dimensional object by directed energy deposition are known. For example, the additive manufacturing apparatuses melt a build material by a laser beam such that beads made of the molten build material are deposited to thereby build a deposit. Another example is an additive manufacturing apparatus that melts a build material by arc discharge to thereby build a deposit. Patent Literature 1 discloses a technique of an additive manufacturing apparatus that builds a deposit that is a three-dimensional object by stacking beads formed by melting a wire that is a build material by arc discharge. The additive manufacturing apparatus of Patent Literature 1 builds the deposit including an inclination by stacking upper layer beads displaced from lower layer beads.

Citation List

Patent Literature

Patent Literature 1: Japanese Patent Application Laid-open No. 2015-160217

Summary

Technical Problem

The method of Patent Literature 1 above involves correcting a dripping position of the build material in depositing the upper layer beads such that the deposit of the beads extends in a height direction by a larger amount than in a horizontal direction as an angle at which the upper layer beads incline relative to the lower layer beads increases. When the method of Patent Literature 1 applies to depositing beads such that the deposit extends from a position on a substrate to a desired position in the horizontal direction, the deposit extends in a vertical direction by a much larger amount than in the horizontal direction. In a case where the inclination of the deposit simply increases such that the direction of deposition of the beads is closer to the horizontal direction in order to suppress the extension of the deposit in the vertical direction, it becomes difficult to stabilize the deposit so as not to collapse. As described above, a problem with the technique of Patent Literature 1 is that it is difficult to deposit the beads such that the deposit is stably built extending in the horizontal direction by a large amount. US5233150 shows an additive manufacturing apparatus and method according to the preamble of claims 1 and 7 respectively.

The present invention has been made in view of the above, and it is an object of the present invention to provide an additive manufacturing apparatus capable of depositing beads such that the deposit is stably built extending in a horizontal direction large by a large amount. Solution to Problem

In order to solve the above problems and achieve the object, the additive manufacturing apparatus according to the present invention builds a deposit on a substrate. The additive manufacturing apparatus according to the present invention builds a deposit on a substrate. The apparatus includes: a feeding unit to feed a build material to a feeding position; an irradiation unit to irradiate the feeding position with a laser beam that melts the build material; a control unit to perform control for building the deposit by stacking beads formed by movement of the feeding position with respect to the substrate and melting of the build material; and an arithmetic unit to execute an arithmetic process of computing parameters for the control unit to perform the control. The beads include two beads stacked on each other, the two beads are a first bead and a second bead stacked on the first bead, the first bead being formed earlier than the second bead, the feeding position being a first position in formation of the first bead, the feeding positon being a second position in formation of the second bead. The arithmetic unit calculates an interval between the first position and the second position in a set direction on a basis of a width of the first bead and a diameter of the laser beam, the set direction being a direction of the width of the first bead. The control unit performs control for setting the second position to a position shifted from the first position in the set direction by the interval, so as to allow a part of the second bead to protrude from the first bead in the set direction.

Advantageous Effects of Invention

The additive manufacturing apparatus according to the present invention achieves an effect of depositing beads such that the deposit is stably built extending in a horizontal direction by the large amount.

Brief Description of Drawings

FIG. 1 is a diagram schematically illustrating a configuration of an additive manufacturing apparatus according to a first embodiment of the present invention.
FIG. 2 is a view for explaining formation of a bead by the additive manufacturing apparatus illustrated in FIG. 1.
FIG. 3 is a view illustrating how the bead illustrated in FIG. 2 is formed as viewed from above.

FIG. 4 is a cross-sectional view illustrating how the bead illustrated in FIG. 2 is stacked.

FIG. 5 is a view for explaining a stacking pitch of the beads when the beads illustrated in FIG. 2 are stacked and the amount of movement of a feeding position in a direction of a width of a bead.

FIG. 6 is a first view for explaining building of a deposit by stacking the beads illustrated in FIG. 2 in an oblique direction.

FIG. 7 is a view for explaining parameters for building of the deposit by stacking the beads in the oblique direction illustrated in FIG. 6.

FIG. 8 is a flowchart illustrating a procedure for the additive manufacturing apparatus illustrated in FIG. 1 to build a deposit by stacking beads in the oblique direction.

FIG. 9 is a view for explaining shapes of a laser beam emitted by the additive manufacturing apparatus illustrated in FIG. 1.

FIG. 10 is a view for explaining a case where a feeding position is irradiated with the type L3 laser beam illustrated in FIG. 9.

FIG. 11 is a view for explaining correction to parameters for suppressing spread of the laser beam beyond the bead illustrated in FIG. 10.

FIG. 12 is a diagram for explaining the type L3 laser beam illustrated in FIG. 9.

FIG. 13 is a second view for explaining the building of the deposit by stacking the beads illustrated in FIG. 2 in the oblique direction.

FIG. 14 is a hardware configuration diagram of a numerical control device of the additive manufacturing apparatus illustrated in FIG. 1.

FIG. 15 is a hardware configuration diagram of an arithmetic device of the additive manufacturing apparatus illustrated in FIG. 1.

FIG. 16 is a view for explaining correction to parameters in the additive manufacturing apparatus according to a second embodiment of the present invention.

FIG. 17 is a view for explaining correction to parameters in the additive manufacturing apparatus according to a third embodiment of the present invention.

FIG. 18 is a view for explaining control in the additive manufacturing apparatus according to a fourth embodiment of the present invention.

FIG. 19 is a view for explaining building of a deposit by the additive manufacturing apparatus according to a fifth embodiment of the present invention.

FIG. 20 is a view for explaining building of a deposit by the additive manufacturing apparatus according to a sixth embodiment of the present invention.

FIG. 21 is a view for explaining building of a deposit by the additive manufacturing apparatus according to a first modification of the sixth embodiment of the present invention.

FIG. 22 is a view for explaining building of a deposit by the additive manufacturing apparatus according to a second modification of the sixth embodiment of the present invention.

FIG. 23 is a view for explaining building of a deposit by the additive manufacturing apparatus according to a third modification of the sixth embodiment of the present invention.

FIG. 24 is an enlarged top view of an auxiliary substrate used in the building of the deposit illustrated in FIG. 23.

FIG. 25 is an enlarged side view of the auxiliary substrate used in the building of the deposit illustrated in FIG. 23.

FIG. 26 is a view illustrating a cross section of a relevant part of the configuration illustrated in FIG. 23.

FIG. 27 is a view for explaining building of a deposit by the additive manufacturing apparatus according to a fourth modification of the sixth embodiment of the present invention.

Description of Embodiments

Hereinafter, an additive manufacturing apparatus and an additive manufacturing method according to each embodiment of the present invention will be described in detail with reference to the drawings. The invention is not limited to the embodiments.

First Embodiment

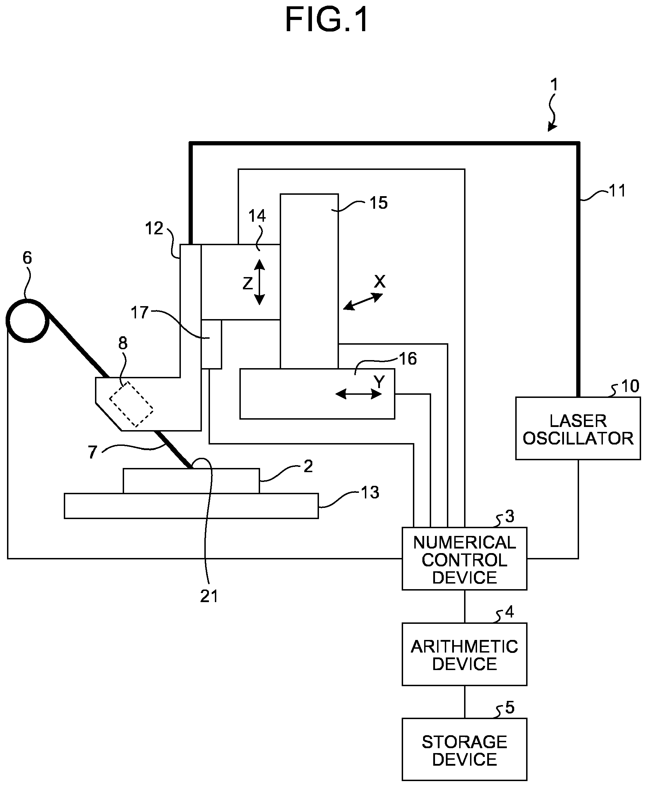

FIG. 1 is a diagram schematically illustrating a configuration of an additive manufacturing apparatus 1 according to a first embodiment of the present invention. The additive manufacturing apparatus 1 manufactures a three-dimensional object by a directed energy deposition method. The additive manufacturing apparatus 1 builds a deposit, which is a three-dimensional object, on a plane of a substrate 2. The substrate 2 is placed on a stage 13. The substrate 2 illustrated in FIG. 1 is a plate material. The substrate 2 may be other than the plate material.

The additive manufacturing apparatus 1 includes a laser oscillator 10 that emits a laser beam, an optical transmission path 11 through which the laser beam emitted from the laser oscillator 10 passes, and a working head 12 that irradiates the substrate 2 with the laser beam from the optical transmission path 11. The laser oscillator 10, the optical transmission path 11, and the working head 12 define an irradiation unit that irradiates a feeding position with a laser beam for melting a build material. The laser oscillator 10 is a gas laser such as a $CO_2$ laser and a CO laser, a solid laser such as a semiconductor laser, or a fiber laser.

A wire feeding device 6 feeds a wire 7 that is a build material. A wire feeding guide 8 guides the wire 7 fed from the wire feeding device 6 to a feeding position on the substrate 2. The wire feeding guide 8 is integrated with the working head 12. The wire feeding device 6 and the wire feeding guide 8 define a feeding unit that feeds the wire 7 to the feeding position. The wire feeding guide 8 feeds the wire 7 such that a tip 21 of the wire 7 reaches the feeding position. A material of the wire 7 contains metal that, when irradiated by a laser beam from the laser oscillator 10, can be melted.

A Z-axis driving device 14 moves the working head 12 in a Z-axis direction that is a vertical direction. An X-axis driving device 15 moves the working head 12 in an X-axis direction perpendicular to the Z-axis direction. A Y-axis driving device 16 moves the working head 12 in a Y-axis direction perpendicular to the Z-axis direction and the X-axis direction. The Z-axis driving device 14, the X-axis driving device 15, and the Y-axis driving device 16 provide mechanisms can move the working head 12 in three-dimensional directions: the Z-axis direction; the X-axis direction; and the Y-axis direction. The additive manufacturing apparatus 1 may include a mechanism other than the three drive devices of the Z-axis driving device 14, the X-axis driving device 15, and the Y-axis driving device 16.

The additive manufacturing apparatus 1 includes a numerical control device 3 that totally controls the entire additive manufacturing apparatus 1, an arithmetic device 4 that executes an arithmetic process, and a storage device 5 that holds a database. The numerical control device 3, which is a control unit of the additive manufacturing apparatus 1, performs control such that beads formed by movement of the feeding position relative to the substrate 2 and melting of the wire 7 are stacked together to thereby build a deposit on the substrate 2. The arithmetic device 4, which is an arithmetic unit of the additive manufacturing apparatus 1, executes an arithmetic process of parameters for the numerical control device 3 to perform the control. The storage device 5, which is a storage unit of the additive manufacturing apparatus 1, stores the parameters in the database.

By sending a command to the laser oscillator 10, the numerical control device 3 controls the power of the laser beam to be emitted, and emission of a laser beam from the laser oscillator 10 and stoppage of the emission of the laser beam. The numerical control device 3 sends a command to each of the Z-axis driving device 14, the X-axis driving device 15, and the Y-axis driving device 16, thereby controlling driving of the Z-axis driving device 14, the X-axis driving device 15, and the Y-axis driving device 16. The Z-axis driving device 14, the X-axis driving device 15, and the Y-axis driving device 16 each move the working head 12 in accordance with the command received from the numerical control device 3. By sending a command to the wire feeding device 6, the numerical control device 3 controls feeding of the wire 7 from the wire feeding device 6 and stop of the feeding of the wire 7, and a feeding speed of the wire 7.

The additive manufacturing apparatus 1 includes a measurement device 17 that measures a shape of a formed bead. The measurement device 17 includes an imaging sensor that captures an image of the bead.

The measurement device 17 acquires data on a bead width and a bead height from imaging data obtained by the imaging sensor. The measurement device 17 sends the acquired data to the numerical control device 3. The measurement device 17 may include a non-contact-type position sensor capable of measuring a shape of a bead, such as a laser displacement sensor, or a contact-type position sensor.

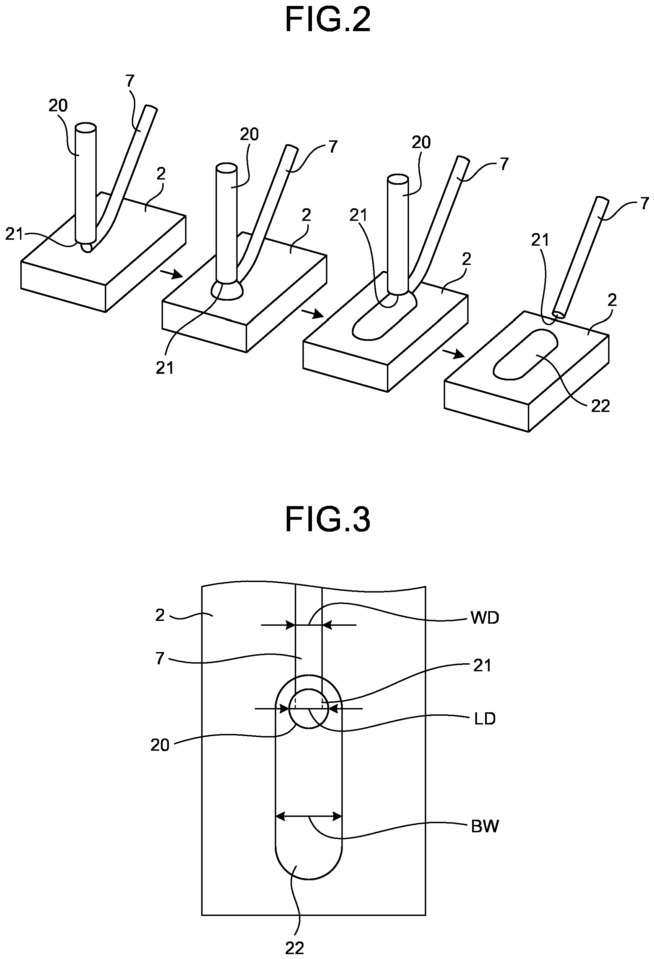

Next, a description will be made as to how the additive manufacturing apparatus 1 according to the first embodiment builds a deposit. FIG. 2 is a view for explaining formation of a bead 22 by the additive manufacturing apparatus 1 illustrated in FIG. 1. FIG. 2 illustrates a procedure for forming, on the substrate 2, the bead 22 of a first layer that is a lowermost layer of the deposit.

The wire feeding device 6 and the wire feeding guide 8 feed the wire 7 to a feeding position. The wire 7 is fed so that the tip 21 of the wire 7 in the feeding position points in a direction opposite to a direction of advancement of the formation of the bead 22 on the substrate 2. The feeding position is a position on a plane of the substrate 2 on which the deposit is provided or a position above the plane. The feeding position may be a position in the plane of the substrate 2 where the deposit is provided. The tip 21 in the feeding position is irradiated with a laser beam 20 from the working head 12.

The wire 7 is heated by receiving the laser beam 20, such that when a temperature of a vicinity of the tip 21 becomes higher than the melting point of the wire 7, the wire 7 melts from the tip 21. The melt of the wire 7 is placed on the substrate 2. The substrate 2 has its portion irradiated with the laser beam 20, and the irradiated portion melts. The melt of the wire 7 is welded to the molten portion of the substrate 2.

The additive manufacturing apparatus 1 drives at least one of the X-axis driving device 15 and the Y-axis driving device 16, thereby moving the working head 12 in the direction of the advancement of the formation of the bead 22. The additive manufacturing apparatus 1 moves the feeding position by moving the working head 12 in a horizontal direction. The additive manufacturing apparatus 1 may move the feeding position relative to the substrate 2 by moving the stage 13 instead of the working head 12. The additive manufacturing apparatus 1 is only required to be capable of moving the feeding position relative to the substrate 2 by moving at least one of the working head 12 and the stage 13.

The movement of the feeding position advances the welding of the melt of the wire 7 and the substrate 2 along a locus of the movement of the feeding position. After the feeding position has moved to a position set in advance, the laser oscillator 10 stops emitting the laser beam 20. The wire feeding device 6 stops feeding the wire 7. In this manner, the additive manufacturing apparatus 1 forms the bead 22 on the substrate 2 by welding the melt of the wire 7 and the substrate 2 together. FIG. 2 illustrates how the bead 22 having a linear shape is formed as the feeding position moves in one direction.

The additive manufacturing apparatus 1 forms, on the bead 22 of the first layer, the bead 22 of a second layer by a procedure similar to that for the bead 22 of the first layer. During the formation of the bead 22 of the second layer, a portion of the bead 22 of the first layer is irradiated with the laser beam 20 and melts. The melt of the wire 7 and the bead 22 of the first layer are welded together to thereby form the bead 22 of the second layer. The additive manufacturing apparatus 1 forms the beads 22 of third and subsequent layers similarly to the bead 22 of the second layer. The additive manufacturing apparatus 1 builds a deposit by stacking the beads 22 in this manner.

The bead 22 formed by the additive manufacturing apparatus 1 is not limited to the bead 22 having a linear shape such as that illustrated in FIG. 2. The additive manufacturing apparatus 1 can form the beads 22 having a variety of shapes by freely moving the feeding position in the horizontal direction. The bead 22 may have a curved shape such as a circular arc, or a loop shape such as a circle. The additive manufacturing apparatus 1 can build a hollow deposit by stacking the loop-shaped beads 22. The additive manufacturing apparatus 1 may form the bead 22 having a planar shape by filling a predetermined range in the horizontal direction with the bead 22. The additive manufacturing apparatus 1 can build a solid deposit by stacking the planar beads 22.

Next, parameters relating to shapes and positions of the beads 22 will be described with reference to FIGS. 3 to 6. The arithmetic device 4 executes an arithmetic process of computing parameters as is described below. FIG. 3 is a view illustrating how the bead 22 illustrated in FIG. 2 is formed as viewed from above. The wire feeding device 6 feeds the wire 7 having a diameter WD. A diameter LD of the laser beam 20 is approximately equal to the diameter WD of the wire 7 or larger than the diameter WD. The bead 22 having a width BW larger than at least the diameter WD is formed by the feeding of the wire 7 having the diameter WD to the feeding position and the irradiation of the feeding position with the laser beam 20 having the diameter LD. The shape of the bead 22 varies depending on a feeding speed of the wire 7, a moving speed of the laser beam 20, materials of the substrate 2 and the wire 7, and a beam shape of the laser beam 20.

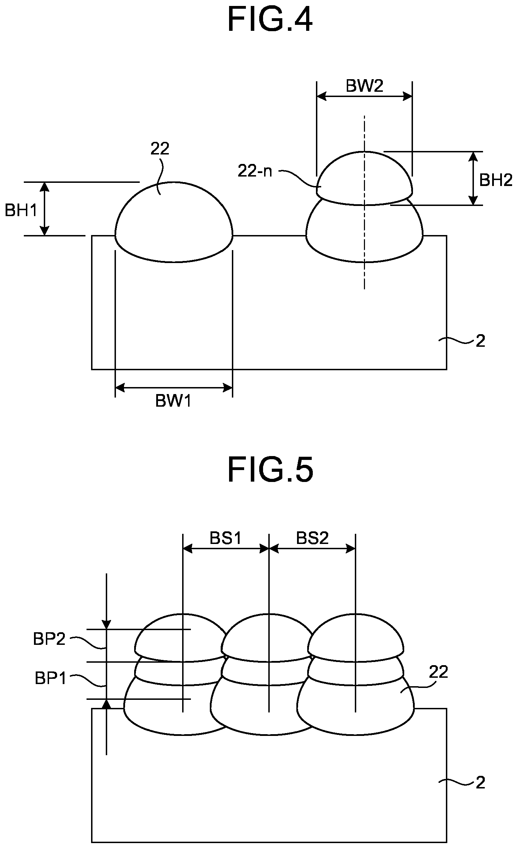

FIG. 4 is a cross-sectional view illustrating how the bead 22 illustrated in FIG. 2 is stacked. In the cross-sectional views in FIG. 4, FIG. 5 and subsequent figures as will be described later, hatching, which indicates a cross section, is omitted. At the boundary between the bead 22 and the substrate 2, the material of the bead 22 and the material of the substrate 2 interpenetrate with each other, and consequently, the boundary between the bead 22 and the substrate 2 may not be clear. In FIG. 4, the boundary between the bead 22 and the substrate 2 is schematically represented by a line. The boundary between the beads 22 is also schematically represented by a line similarly to the boundary between the bead 22 and the substrate 2.

The bead 22 having a height BH in the vertical direction is formed on the substrate 2 as illustrated in FIG. 4, by the feeding of the wire 7 having the diameter WD to the feeding position and the irradiation of the feeding position with the laser beam 20 having the diameter LD, which are illustrated in FIG. 3. In the first embodiment, the bead 22 is formed such that $BH \leq BW$ is satisfied. The bead 22 stacked at an n-th time above the substrate 2 is denoted by a bead 22-n. "n" is an arbitrary integer that is 1 or more. A height $BH_n$ is the height BH of the bead 22-n. A width $BW_n$ is the width BW of the bead 22-n. Widths $BW_2$, $BW_3$, ... of the beads 22-2, 22-3, ... are equal to or smaller than a width $BW_1$, which is a width of the bead 22 on the substrate 2. Heights $BH_2$, $BH_3$, ... of the beads 22-2, 22-3, ... are equal to a height $BH_1$ of the bead 22 on the substrate 2 or smaller than the height $BH_1$. The measurement device 17 may measure the width $BW_n$ and the height $BH_n$ each time the beads 22 and 22-n are formed. The width $BW_n$ and the height $BH_n$ may be obtained by an experiment and stored in the database in the storage device 5 in advance. The width $BW_n$ and the height $BH_n$ are parameters for building a deposit by stacking the beads 22 in the vertical direction.

FIG. 5 is a view for explaining a stacking pitch of the beads 22 when the beads 22 illustrated in FIG. 2 are stacked and the amount of movement of the feeding position in a direction of the width BW of the bead 22. The feeding position is a position to which the wire 7 is fed. A stacking pitch BP is an interval between the feeding positions in the vertical direction. The stacking pitch BP of the bead 22 stacked at an i-th time is denoted by a stacking pitch $BP_i$. "i" is an arbitrary integer that is 1 or more. In the first embodiment, stacking pitches $BP_1$, $BP_2$, $BP_3$, ... are equal to one another. The stacking pitch $BP_i$ is stored in the database in the storage device 5 in advance. The stacking pitch $BP_i$ is a parameter for building a deposit by stacking the beads 22 in the vertical direction.

A movement amount BS is an amount of movement of the feeding position in a plane direction when the planar bead 22 is formed. The plane direction is a direction parallel to a surface of the substrate 2 on which the bead 22 is formed. Similarly to the beads 22 adjacent in the vertical direction, the beads 22 adjacent in the horizontal direction are welded to each other. The movement amount BS of the bead 22 stacked at a j-th time is denoted by a movement amount $BS_j$. "j" is an arbitrary integer that is 1 or more. In the first embodiment, movement amounts $BS_1$, $BS_2$, $BS_3$, ... are equal to one another. The movement amount $BS_j$ is stored in the database in the storage device 5 in advance. The movement amount $BS_j$ is a parameter for building a deposit by stacking the beads 22 in the vertical direction.

In the additive manufacturing apparatus 1, a database storing therein parameters for building desired deposits is constructed before a product is actually machined. In machining the product, the numerical control device 3 sets various conditions in accordance with the parameters in the database. On the basis of the parameters stored in the database, the arithmetic device 4 executes an arithmetic process for correcting various conditions.

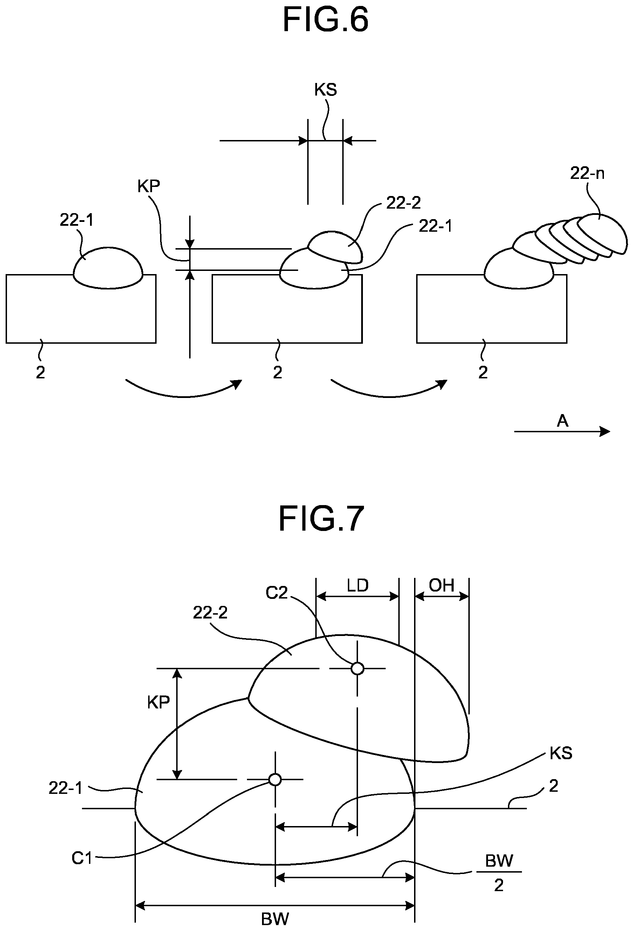

The additive manufacturing apparatus 1 can build a deposit by stacking the beads 22 in an oblique direction between the vertical direction and the horizontal direction. FIG. 6 is a first view for explaining the building of the deposit by stacking the beads 22 illustrated in FIG. 2 in the oblique direction.

A bead 22-1 of a first layer, which is the lowermost layer of the deposit, is formed similarly to the case illustrated in FIGS. 2 and 3. A bead 22-2 of a second layer from the bottom is formed with the center of the bead 22-2 shifted from the center of the bead 22-1 in a set direction. The set direction is a target direction that is a preset direction of extension of the deposit by deposition of the beads 22. An arrow A illustrated in FIG. 6 represents the set direction. The feeding position set in forming the bead 22-2 is shifted a pitch KP upwardly from the feeding position set in forming the bead 22-1. The feeding positon set in forming the bead 22-2 is also shifted by a movement amount KS in the set direction from the feeding position set in forming the bead 22-1. The bead 22-2 is stacked on the bead 22-1 in the oblique direction such that a part of the bead 22-2 protrudes in the set direction beyond the bead 22-1. Also in the third and subsequent layers, the beads 22 are stacked in the oblique direction similarly to the beads 22-2. The stacking of the bead 22 is repeated until a deposit having a desired length in the set direction is obtained. Where the beads 22-1, 22-2 and 22-n need not be individually referred to, they are referred to as the beads 22.

Next, parameters for building the deposit by stacking beads 22 in the oblique direction will be described. FIG. 7 is a view for explaining parameters for the building the deposit by stacking the beads 22 in the oblique direction illustrated in FIG. 6.

A first bead, which is one of two beads that are stacked on each other, is formed earlier than the other. A second bead is the other bead stacked on the first bead. For the two beads 22-1 and 22-2, the bead 22-1 is the first bead and the bead 22-2 is the second bead. A first position C1 is a feeding position set in forming the first bead. A second position C2 is a feeding position set in forming the second bead. The second position C2 is a position shifted from the first position C1 by the movement amount KS in the set direction. The movement amount KS is a parameter representing an interval between the first position C1 and the second position C2 in the set direction. The bead 22-2 has a portion protruding in the set direction by a protrusion amount OH beyond the bead 22-1.

Similarly to the case illustrated in FIG. 3, a relation of WD≤LD holds for the diameter WD of the wire 7 and the diameter LD of the laser beam 20. The bead 22 illustrated in FIG. 5 is stacked on an uppermost part of the bead 22. In contrast, the bead 22 illustrated in FIG. 7 is stacked on a position of the bead 22 lower than the uppermost part of the bead 22. Thus, a relation of KP≤BP holds for the stacking pitch BP illustrated in FIG. 5 and the pitch KP illustrated in FIG. 7. The beads 22 illustrated in FIG. 5 are arranged in the plane direction, whereas the beads 22 illustrated in FIG. 7 overlap in the plane direction. Thus, a relation of KS≤BS holds for the movement amount BS illustrated in FIG. 5 and the movement amount KS illustrated in FIG. 7. Furthermore, in the first embodiment, the bead 22 is formed such that satisfy KP<BH is satisfied. From KP<BH and BH≤BW described above, a relation of KP≤BW holds.

In the formation of the beads 22-1 and 22-2, the movement amount KS of the feeding position from the first position C1 to the second position C2 satisfies a relation expressed by formula (1) below. On the basis of the width BW of the bead 22-1 and the diameter LD of the laser beam 20, the arithmetic device 4 calculates the movement amount KS that satisfies the relation expressed by formula (1). By setting the movement amount KS that satisfies formula (1), the additive manufacturing apparatus 1 can form the bead 22-2 having the portion that protrudes the protrusion amount OH.

$$KS+LD/2 \leq BW/2 \cdots (1)$$

According to formula (1), the diameter LD is set such that the sum of the movement amount KS and the radius LD/2 of the laser beam 20 is equal to or less than half the width of the bead 22, that is, BW/2. The inventors have conducted a test under conditions that satisfy formula (1). The results of the test show that, when the movement amount KS is 0.5 mm, the diameter LD is 4.0 mm, and the width BW is 6.0 mm, a protruding portion protruding a protrusion amount OH1 of approximately 1.2 mm is formed in the bead 22-1 stacked at a first time. Further, the results show that, when the movement amount KS is changed to 1.0 mm, a protruding portion protruding a protrusion amount OH2 of approximately 0.8 mm is formed in the bead 22-2 stacked at a second time. Furthermore, the results show that stacking the beads 22 at a third time and thereafter forms a protruding portion protruding a protrusion amount OH of approximately 0.5 mm on average. In the test, the diameter WD of the wire 7 was 1.2 mm and the height BH of the bead 22 was 3.0 mm. The pitch KP in the first stacking was 1.0 mm, and the pitch KP in each of the second and subsequent stacking was 0.5 mm.

In addition, when the movement amount KS satisfies a relation expressed by formula (2) below, the bead 22 to be stacked further in the oblique direction can be formed on the bead 22-2 which has been stacked in the oblique direction.

$$KS+LD/2 \leq OH+BW/2 \cdots (2)$$

With $KP \leq BW$ described above and formula (1), $KS+LD/2 \leq BW/2$ and $BW/2 \geq BH/2 > KP/2$ are satisfied, thereby establishing $KS+LD/2 > KP/2$, that is, $KP < 2 \times KS+LD$. $KP < BH$ described above indicates that the pitch KP does not exceed the height BH. The feeding position in the formation of the bead 22 to be stacked on the bead 22 which has been already formed is set such that $KP < 2 \times KS+LD$, which has been derived from $KP < BH$ and formula (1), is satisfied. In that case, the wire 7 is brought into contact with the already formed bead 22 to form the bead 22 such that a larger amount of the build material is welded to a lateral portion of the already formed bead 22 shifted laterally from the center of the already formed bead 22 in the set direction than to a portion of the already formed bead above the center of the already formed bead. As a result, the additive manufacturing apparatus 1 can deposit the bead 22 such that the extension of the deposit in the horizontal direction becomes large. Even when the wire 7 cannot be brought into contact with the already formed bead 22, as long as a value of the diameter LD does not exceed a range that satisfies formula (1), the bead 22 can be formed such that the larger amount of the build material is welded to the lateral portion.

In forming the bead 22 to be stacked on the bead 22-2 in the oblique direction, additionally, the laser beam 20 is emitted without spreading beyond the portion of the bead 22-2 protruding the protrusion amount OH. In such a case, it is possible to suppress unnecessary irradiation of the substrate 2 with the laser beam 20. Since the additive manufacturing apparatus 1 can suppress the unnecessary irradiation of the substrate 2 with the laser beam 20, it is possible to reduce a heat-affected layer left on the substrate 2.

The additive manufacturing apparatus 1 forms the bead 22-n stacked at the n-th time such that the bead 22-n includes a portion protruding in the set direction beyond a bead 22-(n-1) located underneath the bead 22-n. A pitch KPn, a movement amount KSn, and a protrusion amount OHn are set for the bead 22-n. The pitches KP and KPn, the movement amounts KS and KSn, as well as the protrusion amounts OH and OHn, which are parameters for building a deposit by stacking the beads 22 in the oblique direction, are stored in the database of the storage device 5.

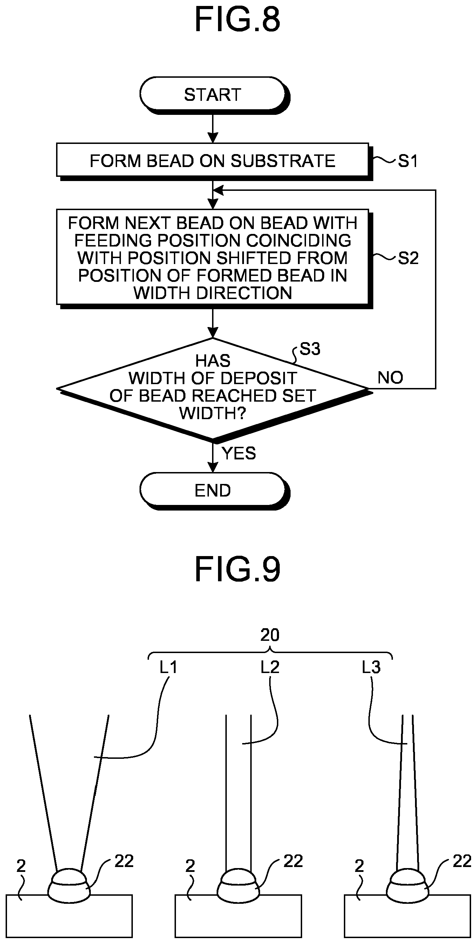

FIG. 8 is a flowchart illustrating a procedure for the additive manufacturing apparatus 1 illustrated in FIG. 1 to build a deposit by stacking the beads 22 in the oblique direction. In Step S1, the additive manufacturing apparatus 1 forms the bead 22-1 as a first bead on the substrate 2. In Step S2, the additive manufacturing apparatus 1 forms the next bead 22-2 on the bead 22-1 with the feeding position coinciding with the second position C2. The second position C2 is a position shifted from the first position C1 in the width BW direction that is the set direction. The first position C1 is the position of the bead 22-1 formed in Step S1.

In Step S3, the additive manufacturing apparatus 1 determines whether the width of the deposit of the bead 22 in the set direction has reached a width set in advance. In a case where the width of the deposit does not reached the set width (Step S3, No), Steps S2 and S3 are repeated. In a case where the width of the deposit has reached the set width (Step S3, Yes), the additive manufacturing apparatus 1 terminates building the deposit (end).

A user makes the additive manufacturing apparatus 1 read design data on a finished product. The arithmetic device 4 calculates parameters for building the deposit on the basis of the design data. With the use of the calculated parameters, the additive manufacturing apparatus 1 builds the deposit by the procedure illustrated in FIG. 8. The arithmetic device 4 calculates parameters such as the movement amount KS and the pitch KP, using the data acquired by the measurement device 17 at the time of building of the deposit. The arithmetic device 4 stores the calculated parameters, and constructs a database representing machining characteristics in building deposits that will be products. In accordance with the constructed database, the additive manufacturing apparatus 1 builds a deposit that will be a product.

The additive manufacturing apparatus 1 sets the movement amount KS on the basis of the width BW of the first bead and the diameter LD of the laser beam 20, thereby setting the feeding position so as to form the second bead including a portion protruding in the set direction beyond the first bead by the protrusion amount OH. Each time the additive manufacturing apparatus 1 stacks the bead 22, the additive manufacturing apparatus 1 moves the feeding position in the set direction by the movement amount KS, thereby building the deposit extending in the horizontal direction by a larger amount than in the vertical direction. The additive manufacturing apparatus 1 can deposit the bead 22 such that the protrusion amount OH in the set direction is formed, and set the feeding position in forming the second bead such that the second bead is formed at a location where the second bead can be stabilized with respect to the first bead. As a result, the additive manufacturing apparatus 1 can deposit the beads 22, suppressing collapse of the deposit. As is discussed above, therefore, the additive manufacturing apparatus 1 achieves an effect of depositing the beads 22 such that the deposit is stably built extending in the horizontal direction by a large amount.

Next, correction of parameters in building the deposit by stacking the beads 22 in the oblique direction will be described. FIG. 9 is a view for explaining shapes of the laser beam 20 emitted by the additive manufacturing apparatus 1 illustrated in FIG. 1. The additive manufacturing apparatus 1 can use type L1 of the laser beam 20 having a shape converging toward the feeding position, type L2 of the laser beam 20 travelling in parallel toward the feeding position, and type L3 of the laser beam 20 having a shape enlarging in diameter toward the feeding position. The type L1 laser beam 20 is a Gaussian beam whose focus position is set on one side of the feeding position oppositely from a laser oscillator 10. The type L3 laser beam 20 is a Gaussian beam whose focus position is set on the same side of the feeding position as the laser oscillator 10. The type L2 laser beam 20 is what is called a top-hat beam. The additive manufacturing apparatus 1 can correct parameters for suppressing unnecessary irradiation of the substrate 2 with the laser beam 20 when the type L3 laser beam 20 is used.

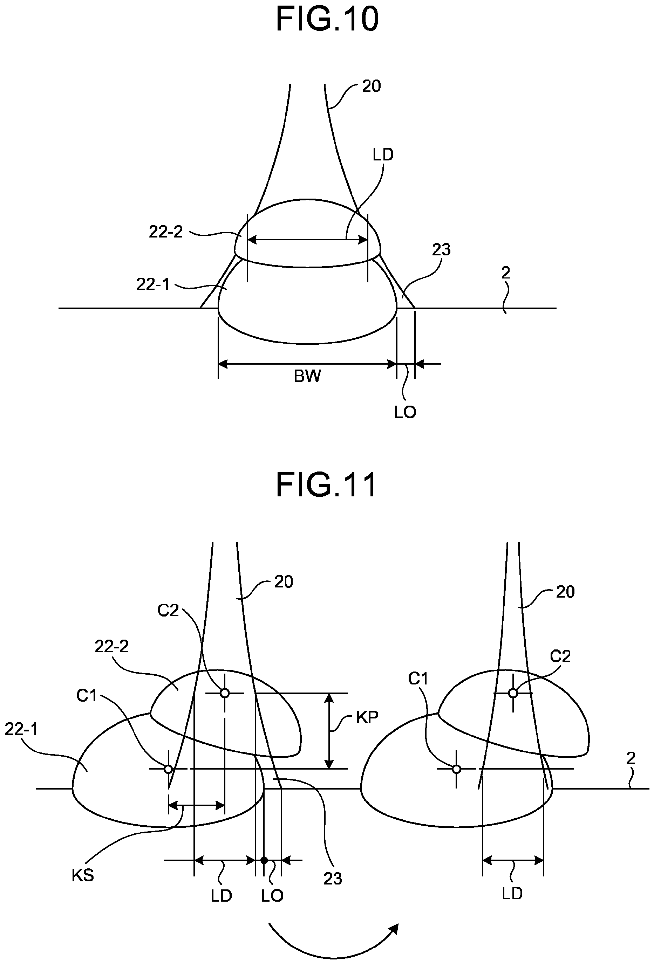

FIG. 10 is a view for explaining a case where the feeding position is irradiated with the type L3 laser beam 20 illustrated in FIG. 9. The additive manufacturing apparatus 1 can suppress unnecessary irradiation of the substrate 2 with the laser beam 20 by making the diameter LD of the laser beam 20 smaller than the width BW of the bead 22 or by adjusting the focus position. The type L3 laser beam 20 has a larger diameter at a position on the substrate 2 beyond the feeding position than the diameter LD at the feeding position. As a result, the laser beam 20 has the desired diameter LD at the feeding position, but sometimes, spreads beyond the bead 22-1 by a spreading width LO.

FIG. 11 is a view for explaining correction to parameters for suppressing spread of the laser beam 20 beyond the bead 22-1 illustrated in FIG. 10. A left portion of FIG. 11 illustrates a state in which the laser beam 20 having the diameter LD at the second position C2 is emitted. In that state, the laser beam 20 spreads on a side of the substrate 2 beyond the second position C2, thereby making a spreading portion 23 having the spreading width LO on the substrate 2.

A right portion of FIG. 11 illustrates a state in which the laser beam 20 having the diameter LD at the first position C1 is emitted. In that state, the laser beam 20 less spreads on the side of the substrate 2 beyond the second position C2 than the laser beam 20 having the diameter LD at the second position C2 does. That is, the arithmetic device 4 moves the position where the laser beam 20 has the predetermined diameter LD from the second position C2 to the first position C1, thereby correcting the diameter of the laser beam 20 in emitting the laser beam 20 with the second position C2 set as the feeding position. On the substrate 2, the spread of the laser beam 20 is suppressed, whereby the spread of the laser beam 20 beyond the bead 22-1 is reduced. As a result, the additive manufacturing apparatus 1 can suppress unnecessary irradiation of the substrate 2 with the laser beam 20 to thereby reduce the heat-affected layer generated in the substrate 2. In the state illustrated in the right portion of FIG. 11, the bead 22-1 receives the whole of the laser beam 20. In that case, the additive manufacturing apparatus 1 can prevent the laser beam 20 from spreading to the substrate 2. The correction to the diameter of the laser beam 20 for suppressing the spread of the laser beam 20 beyond the bead 22-1 makes the size of the bead 22-2 smaller than that of the bead where the correction is not made.

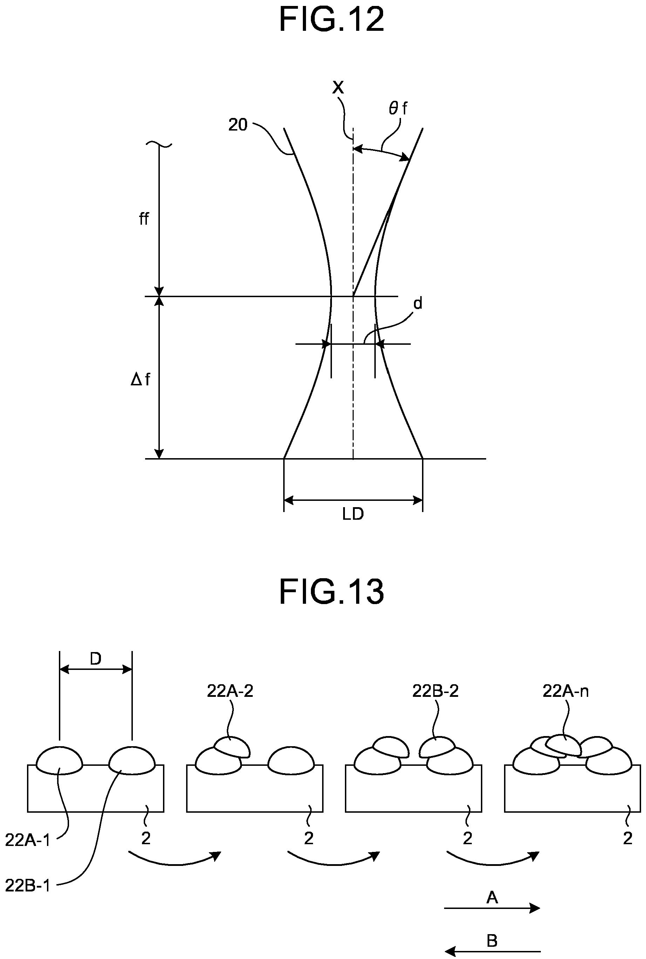

FIG. 12 is a diagram for explaining the type L3 laser beam 20 illustrated in FIG. 9. In general, the diameter d of the laser beam 20 at the focus position located at a focal length ff from a light source is determined by specification parameters of an optical lens provided in the irradiation unit. It is desirable to measure in advance the diameter LD of the laser beam 20 at a distance $\Delta f$ from the focus position. Assuming that the diameter LD is a diameter at which 86.5% of the beam intensity is focused, the diameter LD is roughly calculated by the formula $LD=2\times\Delta f\times\theta f$. Assuming that the diameter LD is a diameter at which 100% of the beam intensity is focused, the diameter LD is roughly calculated by the formula $LD=2\times(2\times\Delta f\times\theta f)$. $\theta f$ is a maximum angle defined by a light flux and an optical axis X of the laser beam 20.

According to the above formula $LD=2\times\Delta f\times\theta f$, when $\Delta f$ is equal to 25.0 mm and $\theta f$ is equal to 0.064 rad, LD becomes equal to 3.2 mm. Regarding the diameter LD at the first position C1 illustrated in FIG. 11, when KP is set to 2.0 mm, LD becomes approximately equal to 3.46 mm in accordance with the formula $LD=2\times(\Delta f+KP)\times\theta f$. In that case, the spreading width LO becomes approximately equal to 0.13 mm in accordance with the formula $LO=(\Delta f+KP)\times\theta f$. The spreading width LO increases as the beads 22 are stacked.

The arithmetic device 4 may correct the movement amount KS by subtracting the spreading width LO calculated in accordance with the formula $LO=(\Delta f+KP)\times\theta f$ from the movement amount KS stored in the database. The correction to the movement amount KS enables the whole of the laser beam 20 to be received by the bead 22-1, such that the spread of the laser beam 20 to the substrate 2 can be suppressed. As a result, the additive manufacturing apparatus 1 can suppress the spread of the laser beam 20 to the substrate 2 to thereby reduce the heat-affected layer generated in the substrate 2. The arithmetic device 4 may appropriately correct the pitch KP stored in the database to a smaller pitch to thereby perform correction making the spreading width LO smaller. Also in that case, the additive manufacturing apparatus 1 can suppress the spread of the laser beam 20 to the substrate 2 to thereby reduce the heat-affected layer generated in the substrate 2. In a case where there is no need to consider generation of the heat-affected layer on the substrate 2, the arithmetic device 4 does not have to perform the correction such as that described above.

The arithmetic device 4 may perform correction to parameters not only when the above-described type L3 laser beam 20 is used, but also when the type L1 or type L2 laser beam 20 is used. Also in that case, the additive manufacturing apparatus 1 can suppress the spread of the laser beam 20 to the substrate 2 to thereby reduce the heat-affected layer generated in the substrate 2.

The arithmetic device 4 may calculate the spreading width LO, using the specification parameters of the optical lens. The arithmetic device 4 stores the obtained spreading width LO in the database of the storage device 5. The arithmetic device 4 may store, in the database, the spreading width LO obtained by an arithmetic operation of a device outside the additive manufacturing apparatus 1. The arithmetic device 4 may calculate the spreading width LO on the basis of experimental data obtained by irradiation with the laser beam 20.

FIG. 13 is a second view for explaining the building of the deposit by stacking the beads 22 illustrated in FIG. 2 in the oblique direction. A bead 22A-n is the bead 22-n stacked when the set direction is a direction of the arrow A. A bead 22B-n is the bead 22-n stacked when the set direction is a direction of an arrow B, which is opposite to the direction of the arrow A. The example illustrated in FIG. 13 illustrates a state where stacking of the beads 22A-n and stacking of the beads 22B-n build one structure configured to include two deposits connected to each other. The direction of the arrow A is a first set direction from the bead 22A-1 toward the bead 22B-1. The direction of the arrow B, which is opposite to the direction of the arrow A, is a second set direction from the bead 22B-1 toward the bead 22A-1. The additive manufacturing apparatus 1 builds a first deposit by stacking the beads 22A-n when the first set direction is the set direction. The additive manufacturing apparatus 1 builds a second deposit extending toward the first deposit by stacking the beads 22B-n when the second set direction is the set direction. The additive manufacturing apparatus 1 builds a single structure by connecting the first deposit and the second deposit to each other above the substrate 2.

The stacking of the beads 22 from the bead 22A-1 and the stacking of the beads 22 from the bead 22B-1 are performed until a relation expressed by $D-BW \leq (m+1) \times OH$ is satisfied where D is a distance between the feeding position in the formation of the bead 22A-1 and the feeding position in the formation of the bead 22B-1, BW is the width of the beads 22A-1 and 22B-1, and OH is the protrusion amount. "m" is an arbitrary natural number, and represents the number of beads 22 stacked from the bead 22A-1 and the bead 22B-1 until a deposit having the direction of the arrow A as the set direction and a deposit having the direction of the arrow B as the set direction are connected to each other. The distance D is preset and stored in the database.

When an interval between the two deposits becomes equal to or less than the protrusion amount OH and the last bead 22A-n is stacked, the deposit having the direction of the arrow A as the set direction and the deposit having the direction of the arrow B as the set direction are connected to each other. In this manner, the additive manufacturing apparatus 1 builds what is called a lid-like structure that covers a space between the bead 22A-1 and the bead 22B-1 on the substrate 2. The additive manufacturing apparatus 1 can build the lid-like structure because the additive manufacturing apparatus 1 can build a deposit such that the deposit extends in the horizontal direction by a larger amount than in the vertical direction.

In the additive manufacturing apparatus 1, the wire 7 is used as the build material. Consequently, it is possible to suppress scattering of the build material, as compared with a case where a powdered build material is used. By using the wire 7 as the build material, thus, the additive manufacturing apparatus 1 can reduce an unnecessary build material remaining in a finished product. When building the lid-like structure, the additive manufacturing apparatus 1 can reduce an unnecessary build material remaining in a space covered by the lid.

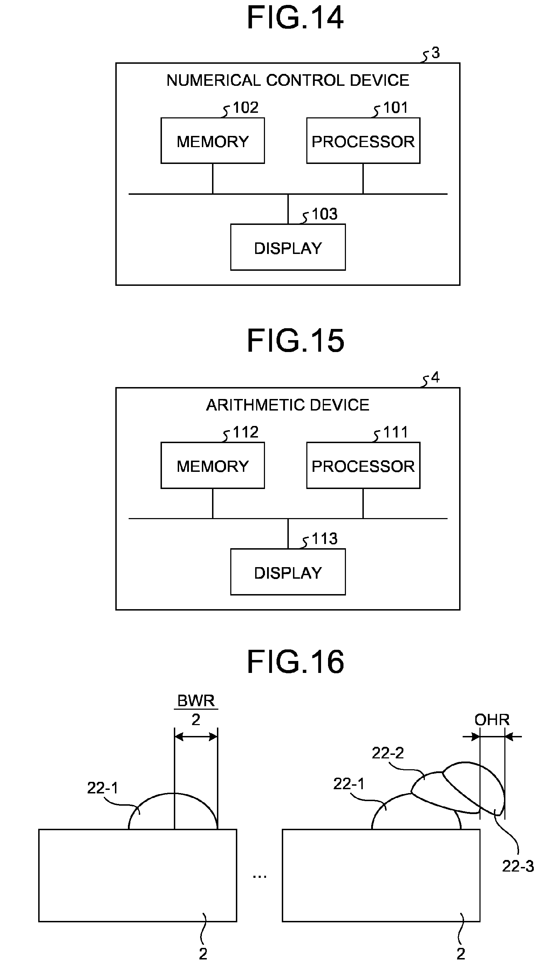

FIG. 14 is a hardware configuration diagram of the numerical control device 3 of the additive manufacturing apparatus 1 illustrated in FIG. 1. A control function of the numerical control device 3 is implemented by a processor 101 executing a program stored in a memory 102. The processor 101 is a central processing unit (CPU), a processing device, an arithmetic device, a microprocessor, a microcomputer, or a digital signal processor (DSP). A function of the numerical control device 3 is implemented by the processor 101, and software, firmware, or a combination of software and firmware. The software or the firmware is described as a program and stored in the memory 102. The memory 102 is a built-in memory, for example, a nonvolatile or volatile semiconductor memory such as a random access memory (RAM), a read only memory (ROM), a flash memory, an erasable programmable read only memory (EPROM), or an electrically erasable programmable read only memory (EEPROM (registered trademark)). A display 103 displays a display screen relating to the control of the additive manufacturing apparatus 1.

FIG. 15 is a hardware configuration diagram of the arithmetic device 4 of the additive manufacturing apparatus 1 illustrated in FIG. 1. An arithmetic function of the arithmetic device 4 is implemented by a processor 111 executing a program stored in a memory 112. The processor 111 is a CPU, a processing device, an arithmetic device, a microprocessor, a microcomputer, or a DSP. A function of the arithmetic device 4 is implemented by the processor 111, and software, firmware, or a combination of software and firmware. The software or the firmware is described as a program and stored in the memory 112. The memory 112 is a built-in memory, for example, a nonvolatile or volatile semiconductor memory such as a RAM, a ROM, a flash memory, an EPROM, or an EEPROM. A display 113 displays a display screen relating to an arithmetic process.

Second Embodiment

In second and third embodiments, examples in which correction to parameters is made on the basis of measured values obtained by the measurement device 17 will be described. FIG. 16 is a view for explaining correction to parameters in the additive manufacturing apparatus 1 according to the second embodiment of the present invention. In the second embodiment, the measurement device 17 measures a value BWR/2 of the half width BW/2 of the bead 22 or a value OHR of the protrusion amount OH thereof. On the basis of the measured value BWR/2 or the measured value OHR of the protrusion amount OH, the movement amount KS is corrected. In the second embodiment, the same components as those in the first embodiment are denoted by the same reference numerals, and a difference of the second embodiment from the first embodiment will mainly be described.

In FIG. 16, the measured value BWR/2 of the bead 22-1 and the measured value OHR of the bead 22-3 are illustrated. When BW/2>BWR/2 holds, the arithmetic device 4 corrects the movement amount KS stored in the database, to KS'=KS+{(BW-BWR)/2}×α. Alternatively, when OH>OHR holds, the arithmetic device 4 corrects the movement amount KS stored in the database, to KS'=KS+(OH-OHR)×β. α and β are numerical values of 1 or more and 2 or less, and are arbitrarily set numerical values. The arithmetic device 4 stores in the database the corrected movement amount KS', and α and β set in calculating the movement amount KS'. The arithmetic device 4 may correct the movement amount KS through an arithmetic operation other than that in accordance with the above formula.

The numerical control device 3 may stop the building when it is determined that a difference between the measured value BWR of the width BW of the bead 22 and the width BW stored in the database is excessive. For example, when BWR>2×BW holds, the difference between the measured value BWR and the width BW is excessive and it is expected that it is difficult to stably stack the beads 22 in the oblique direction. In that case, the numerical control device 3 stops the building and displays an alarm on the display 103.

The numerical control device 3 may stop the building when it is determined that a difference between the measured value OHR and the protrusion amount OH stored in the database is excessive. For example, when OHR>2×OH holds, the difference between the measured value OHR and the protrusion amount OH is excessive and it is expected that it is difficult to stably stack the beads 22 in the oblique direction. In that case, the numerical control device 3 stops the building and displays an alarm on the display 103.

In the building of the lid-like structure illustrated in FIG. 13, the movement amount KS is corrected on the basis of the measured values BWR/2 and OHR for a deposit having the direction of the arrow A as the set direction and a deposit having the direction of the arrow B as the set direction. In the building of the lid-like structure, when D≥OHR+BWR/2 holds, it is expected that the two deposits will not be connected to each other by the predicted number of beads 22 and thus the structure will not be completed. In that case, the numerical control device 3 may display an alarm on the display 103. Alternatively, because the completion of the structure will require formation of the larger number of beads 22 than the predicted number of beads, the numerical control device 3 may display on the display 103 that time taken to complete the structure is prolonged.

Third Embodiment

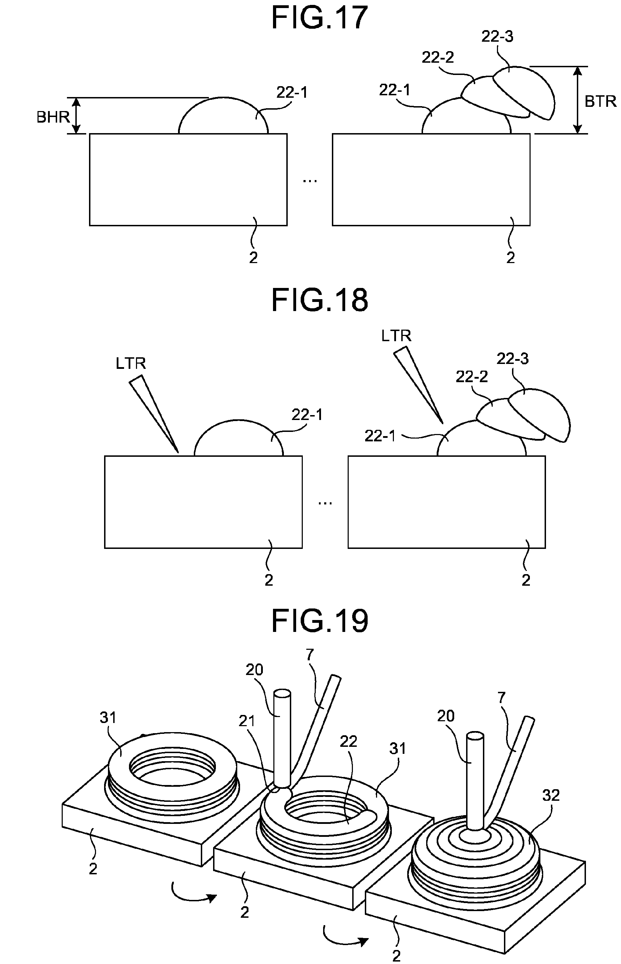

FIG. 17 is a view for explaining correction to parameters in the additive manufacturing apparatus 1 according to the third embodiment of the present invention. In the third embodiment, the measurement device 17 measures a value BHR of the height BH of the bead 22 or a value BTR of a stacking height of the bead 22 from the substrate 2. On the basis of the measured value BHR or the measured value BTR, the pitch KP is corrected. In the third embodiment, the same components as those in the first and second embodiments are denoted by the same reference numerals, and a difference of the third embodiment from the first and second embodiments will mainly be described.

FIG. 17 illustrates the measured value BHR of the bead 22-1 and the measured value BTR of the bead 22-3. When BH>BHR holds, the arithmetic device 4 corrects the pitch KP stored in the database, to KP'=KP+(BH-BHR)×γ. Alternatively, when the sum of the heights BH of the beads 22-1, 22-2 and 22-3 is expressed by BH+BHn and BTR>BH+BHn holds, the arithmetic device 4 corrects the pitch KP stored in the database, to KP'=KP+(BH+BHn-BTR)×δ. γ and δ are numerical values of 1 or more and 2 or less and are arbitrarily set numerical values. The arithmetic device 4 stores, in the database, the corrected pitch KP', and γ and δ set in calculating the pitch KP'.

The numerical control device 3 may stop the building when it is determined that a difference between the measured value BHR of the height BH of the bead 22 and the height BH stored in the database is excessive. For example, when BHR>2×BH holds, the difference between the measured value BHR and the height BH is excessive and it is expected that it is difficult to stably stack the beads 22 in the oblique direction. In that case, the numerical control device 3 stops the building and displays an alarm on the display 103.

The numerical control device 3 may stop the building when it is determined that a difference between the measured value BTR of the stacking height of the bead 22 and BH+BHn that is the sum of the heights BH stored in the database is excessive. For example, when BTR>2×(BH+BHn) holds, the difference between the measured values BTR and BH+BHn is excessive and it is expected that it is difficult to stably stack the beads 22 in the oblique direction. In that case, the numerical control device 3 stops the building and displays an alarm on the display 103.

In the building of the lid-like structure illustrated in FIG. 13, the pitch KP is corrected on the basis of the measured values BHR and BTR for a deposit having the direction of the arrow A as the set direction and a deposit having the direction of the arrow B as the set direction. The bead 22 assumes a shape in which the portion of the protrusion amount OH sags under gravity. In order to suppress the sag deformation of the bead 22, the arithmetic device 4 may correct the pitch KP with the measured value BTR successively measured.

Fourth Embodiment

FIG. 18 is a view for explaining control in the additive manufacturing apparatus 1 according to a fourth embodiment of the present invention. In the fourth embodiment, a temperature of the substrate 2 or the first bead is measured, and building is stopped or conditions are changed on the basis of the measured temperature. In the fourth embodiment, the same components as those in the first to third embodiments are denoted by the same reference numerals, and a difference of the fourth embodiment from the first to third embodiments will mainly be described.

In the fourth embodiment, the measurement device 17 includes a temperature sensor. The temperature sensor is a laser device such as a non-contact pyrometer. The measurement device 17 measures a temperature LTR of the substrate 2 when the bead 22-1 as the first bead is formed. The measurement device 17 measures the temperature LTR of the first bead when the second bead is formed. FIG. 18 illustrates the temperature LTR of the substrate 2 and the temperature LTR of the bead 22-1 as the first bead when the bead 22-2 as the second bead is formed. The arithmetic device 4 compares a temperature LT stored in the database with the temperature LTR. In a case where a step of stacking the second bead on the first bead is performed successively, LTR becomes approximately equal to LT.

As the stacking of the beads 22 is continued, heat generated by irradiation with the laser beam 20 is accumulated in the substrate 2 and the formed beads 22. On the other hand, when the stacking of the beads 22 is interrupted during the building of the deposit, the temperature LTR of the substrate 2 or the bead 22 may decrease from the temperature LT. The stability of the formation of the beads 22 may be affected by the decrease in the temperatures LTR of the substrate 2 and the formed bead 22. In that case, the numerical control device 3 stops the building or continues the building under the conditions changed. In addition, the numerical control device 3 displays an alarm on the display 103. On the basis of a difference between the temperature LT and the temperature LTR, the arithmetic device 4 may correct parameters of various conditions stored in the database.

When it turns out that the temperature LTR decreases, the additive manufacturing apparatus 1 may continue the building, temporarily stacking the second bead on the first bead in the vertical direction instead of stacking the second bead on the first bead in the oblique direction. As a result, the additive manufacturing apparatus 1 can perform the building stably. When it turns out that the temperature LTR decreases, the additive manufacturing apparatus 1 may cause the wire feeding device 6 to stop feeding the wire, and irradiate the substrate 2 and the bead 22 with the laser beam 20. The additive manufacturing apparatus 1 can perform stable building by increasing the temperature of the substrate 2 and the bead 22.

In the building of the lid-like structure illustrated in FIG. 13, the temperature LTR may be measured for each of a deposit having the direction of the arrow A as the set direction and a deposit having the direction of the arrow B as the set direction.

Fifth Embodiment

FIG. 19 is a view for explaining building of a deposit by the additive manufacturing apparatus 1 according to a fifth embodiment of the present invention. In the fifth embodiment, the additive manufacturing apparatus 1 builds a lid-like deposit 32 on a cylindrical structure 31 by forming the bead 22 along a circle while gradually decreasing the diameter of the circle. In the fifth embodiment, the same components as those in the first to fourth embodiments are denoted by the same reference numerals, and a difference from the first to fourth embodiments will mainly be described.

The additive manufacturing apparatus 1 builds the structure 31 by stacking beads formed along a circle. The additive manufacturing apparatus 1 moves the feeding position along the structure 31, thereby forming the bead 22 on the structure 31. After the feeding position is moved in a circle once, the arithmetic device 4 subtracts a length corresponding to the protrusion amount OH or the measured value OHR of the protrusion amount from the radius of the circle, and then sets a circle along which the feeding position is moved next. Each time the feeding position is moved in the circle once, the numerical control device 3 interrupts the formation of the bead 22, thereby forming layers of the bead 22 one by one. Alternatively, the numerical control device 3 moves the feeding position spirally while decreasing the radius of the circle, thereby forming each layer of the bead 22 unicursally. The movement of the feeding position until the feeding position reaches near the central axis of the structure 31 completes the deposit 32 that covers the structure 31. In this manner, the additive manufacturing apparatus 1 can build the lid-like deposit 32 by applying the technique of stacking the beads 22 in the oblique direction.

The additive manufacturing apparatus 1 may build a deposit by moving the feeding position along a loop shape other than a circle such as a polygon. The additive manufacturing apparatus 1 can provide a movement locus of the feeding position in an upper layer with a shape similar to and smaller than that of a movement locus of the feeding position in a lower layer, such that the deposit is built, as in the case where the feeding position is moved along the circle.

Sixth Embodiment

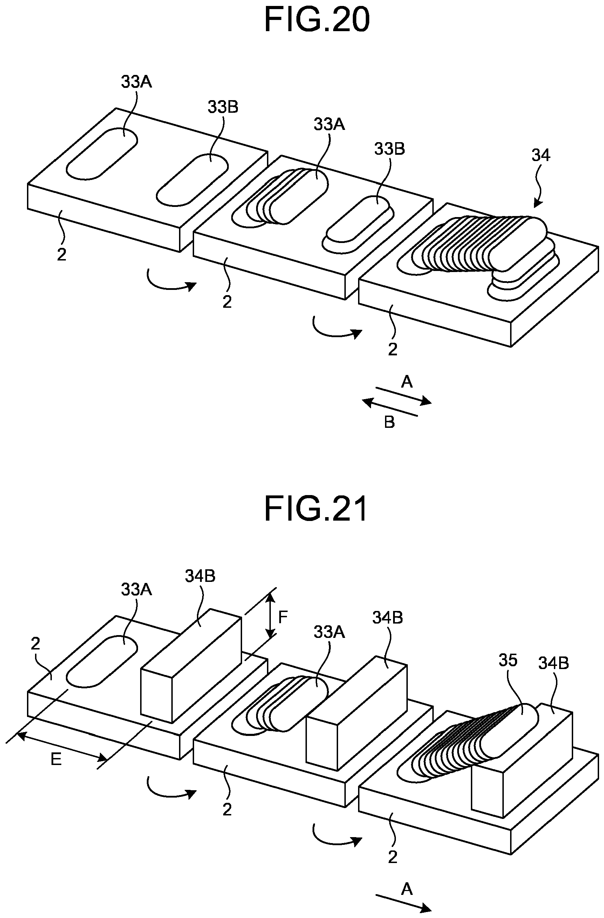

FIG. 20 is a view for explaining building of a deposit by the additive manufacturing apparatus 1 according to a sixth embodiment of the present invention. In the sixth embodiment, the additive manufacturing apparatus 1 stacks beads 33A in the oblique direction while stacking beads 33B in the vertical direction. The additive manufacturing apparatus 1 stacks the beads 33A in the oblique direction such that a deposit of the bead 33A reaches a deposit of the bead 33B located ahead in the set direction. As a result, the additive manufacturing apparatus 1 can build a lid-like structure 34 extending from the substrate 2 to an upper surface of the deposit of the bead 33B.

FIG. 21 is a view for explaining building of a deposit by the additive manufacturing apparatus 1 according to a first modification of the sixth embodiment of the present invention. In the first modification of the sixth embodiment, the additive manufacturing apparatus 1 stacks the beads 33A in the oblique direction such that a deposit of the bead 33A reaches a structure 34B located ahead in the set direction. The structure 34B may be a structure placed on the substrate 2 or may be an upward protruding portion of the substrate 2.

An angle θ at which the deposit of the bead 33A inclines relative to the substrate 2 is obtained by arctan(F/E)=θ where E is a distance in the horizontal direction from the center of the bead 33A formed on the substrate 2 to the structure 34B, and F is a height in the vertical direction of the structure 34B. The arithmetic device 4 corrects the pitch KP to KP'=KS×(F/E) on the basis of the movement amount KS. As a result, the additive manufacturing apparatus 1 can build a lid-like structure 35 extending from the substrate 2 to an upper surface of the structure 34B.

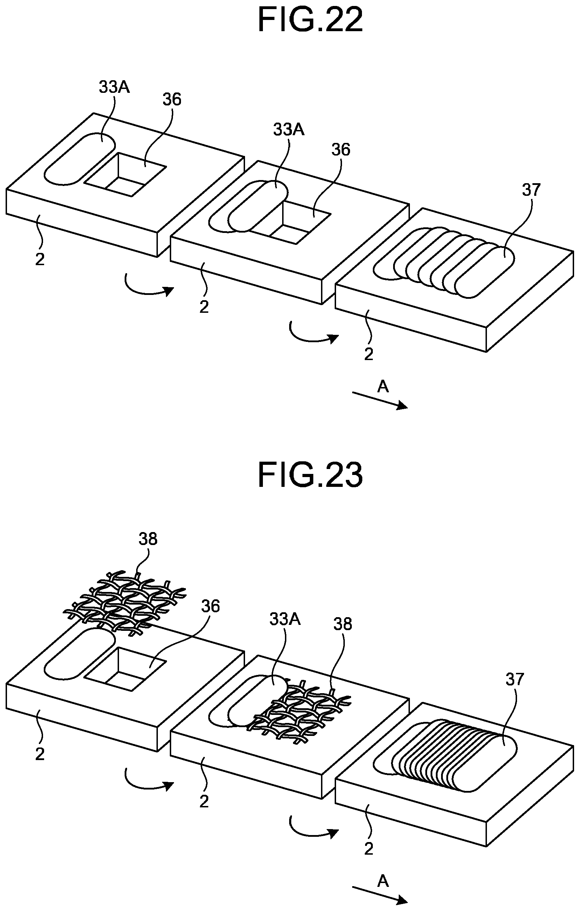

FIG. 22 is a view for explaining building of a deposit by the additive manufacturing apparatus 1 according to a second modification of the sixth embodiment of the present invention. In the second modification of the sixth embodiment, the beads 33A are stacked on top of one another in the set direction from a location before a hole 36 in the set direction, such that a deposit of the bead 33A reaches a location beyond the hole 36. In the second modification of the sixth embodiment, no other deposits or structures rising from the substrate 2 are provided ahead of the bead 33A in the set direction. The deposit built by the stack of beads 33A from the substrate 2 extends in the direction close to the horizontal direction and reaches a region beyond the hole 36 on the substrate 2.

The movement amount KS satisfies the relation of formula (2) of the first embodiment and the pitch KP is made smaller, whereby the deposit of the bead 33A extends in the direction close to the horizontal direction.

As a result, the additive manufacturing apparatus 1 can build a lid-like structure 37 that covers the hole 36 by building the deposit of the bead 33A spanning the hole 36 in the set direction.

FIG. 23 is a view for explaining building of a deposit by the additive manufacturing apparatus 1 according to a third modification of the sixth embodiment of the present invention. In the third modification of the sixth embodiment, a mesh-like auxiliary substrate 38 that covers the hole 36 similar to that in the second modification is disposed and the additive manufacturing apparatus 1 builds a lid-like structure 37.

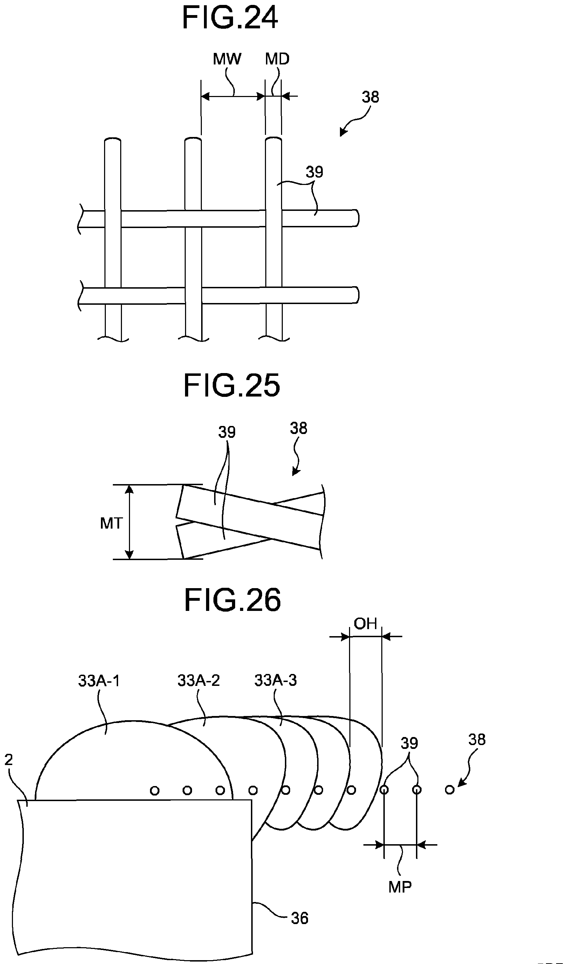

FIG. 24 is an enlarged top view of the auxiliary substrate 38 used in building the deposit illustrated in FIG. 23. The auxiliary substrate 38 is configured by knitting a linear material 39 having a width MD into a mesh having a width MW.

FIG. 25 is an enlarged side view of the auxiliary substrate 38 used in building the deposit illustrated in FIG. 23. The auxiliary substrate 38 is configured by knitting the material 39 at a height MT. The material of the auxiliary substrate 38 is the same as the material of the wire 7 or the same as the material of the substrate 2.

FIG. 26 is a view illustrating a cross section of a relevant part of the configuration illustrated in FIG. 23. The bead 33A-1 is provided on the substrate 2. Regarding the beads 33A-2 and 33A-3 as well as the other beads 33A formed on a side of the beads 33A-2 and 33A-3 in a set direction, the stacking of the beads 33A is continued until the protrusion amount OH satisfies a relation of (MW+MD)×p=OH. "p" is an arbitrary integer and represents the number of stacked beads 33A necessary to allow the deposit to extend from the position before the hole 36 to the position beyond the hole 36 in the set direction.

KS=OH holds for the beads 33A-2 and 33A-3 as well as the other beads 33A formed on the side of the beads 33A-2 and 33A-3 in the set direction. KP=MT holds for the bead 33A-2. KP=0 holds for the bead 33A-3 and the other beads 33A formed on the side of the bead 33A-3 in the set direction.

The auxiliary substrate 38 is welded to the beads 33A and the substrate 2 by melting. Since the auxiliary substrate 38 that covers the hole 36 is provided, the additive manufacturing apparatus 1 can suppress sagging of the beads 33A inside the hole 36. The additive manufacturing apparatus 1 can build the lid-like structure 37 that covers the hole 36.

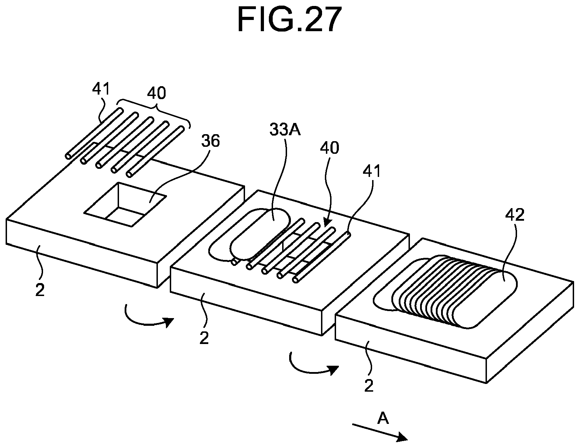

FIG. 27 is a view for explaining building of a deposit by the additive manufacturing apparatus 1 according to a fourth modification of the sixth embodiment of the present invention. In the fourth modification of the sixth embodiment, an auxiliary substrate 40 including a plurality of linear materials 41 is disposed, and the additive manufacturing apparatus 1 builds a lid-like structure 42. The materials 41 are disposed in parallel to each other at regular intervals. Since the auxiliary substrate 40 that covers the hole 36 is provided, the additive manufacturing apparatus 1 can suppress sagging of the beads 33A inside the hole 36. The additive manufacturing apparatus 1 can build the lid-like structure 42 that covers the hole 36.

Reference Signs List

1 additive manufacturing apparatus; 2 substrate; 3 numerical control device; 4 arithmetic device; 5 storage device; 6 wire feeding device; 7 wire; 8 wire feeding guide; 10 laser oscillator; 11 optical transmission path; 12 working head; 13 stage; 14 Z-axis driving device; 15 X-axis driving device; 16 Y-axis driving device; 17 measurement device; 20 laser beam; 21 tip; 22, 33A, 33B bead; 23 spreading portion; 31, 34, 34B, 35, 37, 42 structure; 32 deposit; 36 hole; 38, 40 auxiliary substrate; 39, 41 material; 101, 111 processor; 102, 112 memory; 103, 113 display.

**Claims**

1. An additive manufacturing apparatus (1) for building a deposit on a substrate (2), the apparatus comprising:

   a feeding unit (6, 8) to feed a build material (7) to a feeding position;
   an irradiation unit (10, 11, 12) to irradiate the feeding position with a laser beam that melts the build material;
   a control unit (3) to perform control for building the deposit by stacking beads formed by movement of the feeding position with respect to the substrate and melting of the build material; and
   an arithmetic unit (4) to execute an arithmetic process of computing parameters for the control unit to perform the control, wherein
   the beads include two beads (22-1, 22-2) stacked on each other, the two beads are a first bead (22-1) and a second bead (22-2) stacked on the first bead, the first bead being formed earlier than the second bead, the feeding position being a first position (C1) in formation of the first bead, the feeding positon being a second position (C2) in formation of the second bead, **characterized in that** the arithmetic unit calculates an interval (KS) between the first position and the second position in a set direction on a basis of a width (BW) of the first bead and a diameter (LD) of the laser beam, the set direction being a direction of the width of the first bead, and
   the control unit performs control for setting the second position to a position shifted from the first position in the set direction by the interval, so as to allow a part of the second bead to protrude from the first bead in the set direction.

2. The additive manufacturing apparatus according to claim 1, wherein the arithmetic unit (4) corrects the interval on a basis of a measured value obtained by measurement of a shape of the bead.

3. The additive manufacturing apparatus according to claim 1 or 2, wherein the arithmetic unit (4) corrects a diameter of the laser beam in irradiation of the feeding position with the laser beam, the feeding positon being the second position.

4. The additive manufacturing apparatus according to any one of claims 1 to 3, wherein the arithmetic unit (4) corrects the interval on a basis of a spreading width of the laser beam from the first bead in irradiation of the feeding position with the laser beam, the feeding positon being the second position.

5. The additive manufacturing apparatus according to any one of claims 1 to 4, wherein the build material (7) is a wire.

6. The additive manufacturing apparatus according to any one of claims 1 to 5, wherein the arithmetic unit (4) calculates KS that satisfies a relation expressed by $KS + LD/2 \leq BW/2$ where when BW is the width of the first bead, LD is a diameter of the laser beam, and KS is a movement amount of the feeding position from the first position to the second position, the movement amount being a parameter representing the interval.

7. An additive manufacturing method performed by an additive manufacturing apparatus (1) for building a deposit on a substrate (2), the method comprising:

   a step of feeding a build material (7) to a feeding position;
   a step of irradiating the feeding position with a laser beam that melts the build material;
   a step of performing control for building the deposit by stacking beads formed by movement of the feeding position with respect to the substrate and melting of the build material; and
   a step of executing an arithmetic process of computing a parameter for the control, wherein
   the beads include two beads (22-1, 22-2) stacked on each other, the two beads are a first bead (22-1) and a second bead (22-2) stacked on the first bead, the first bead being formed earlier than the second bead, the feeding position being a first position (C1) in formation of the first bead, the feeding position being a second position (C2) in formation of the second bead, **characterized in that** an interval (KS) between the first position and the second position in a set direction is calculated on a basis of a width (BW) of the first bead and a diameter (LD) of the laser beam, the set direction being a direction of the width of the first bead, and control for setting the second position to a position shifted from the first position in the set direction by the interval is performed so as to allow a part of the second bead to protrude from the first bead in the set direction.

8. The additive manufacturing method according to claim 7, comprising:

a step of building a first deposit by stacking the beads when the set direction is a first set direction (A);

a step of building a second deposit extending toward the first deposit by stacking the beads when the set direction is a second set direction (B); and

a step of building a single structure by connecting the first deposit and the second deposit above the substrate.

**Patentansprüche**

1. Vorrichtung (1) zur additiven Herstellung zum Aufbau einer Ablagerung auf einem Substrat (2), wobei die Vorrichtung aufweist:

eine Zuführeinheit (6, 8) zum Zuführen eines Baumaterials (7) zu einer Zuführposition;

eine Bestrahlungseinheit (10, 11, 12) zur Bestrahlung der Zuführposition mit einem Laserstrahl, der das Baumaterial aufschmilzt;

eine Steuereinheit (3) zur Durchführung einer Steuerung zum Aufbau der Ablagerung durch Stapeln von Schmelzperlen, die durch Bewegung der Zuführposition in Bezug auf das Substrat und Schmelzen des Baumaterials gebildet werden; und

eine Recheneinheit (4) zum Ausführen eines Rechenprozesses zur Berechnung von Parametern für die Steuereinheit, um die Steuerung durchzuführen, wobei die Schmelzperlen zwei aufeinander gestapelte Schmelzperlen (22-1, 22-2) umfassen, wobei die zwei Schmelzperlen ein erste Schmelzperle (22-1) und eine auf der ersten Schmelzperle gestapelte zweite Schmelzperle (22-2) sind, wobei die erste Schmelzperle früher als die zweite Schmelzperle gebildet wird, wobei die Zuführposition bei der Bildung der ersten Schmelzperle eine erste Position (C1) ist, und die Zuführposition bei der Bildung der zweiten Schmelzperle eine zweite Position (C2) ist,

**dadurch gekennzeichnet, dass**

die Recheneinheit ein Intervall (KS) zwischen der ersten Position und der zweiten Position in einer vorgegebenen Richtung auf der Grundlage einer Breite (BW) der ersten Schmelzperle und eines Durchmessers (LD) des Laserstrahls berechnet, wobei die vorgegebene Richtung eine Richtung der Breite der ersten Schmelzperle ist, und

die Steuereinheit die Steuerung zum Einstellen der zweiten Position als eine von der ersten Position in der vorgegebenen Richtung um das Intervall verschobene Position durchführt, so dass ein Teil der zweiten Schmelzperle gegenüber der ersten Schmelzperle in der vorgegebenen Richtung herausragt.

2. Vorrichtung zur additiven Herstellung nach Anspruch 1, wobei die Recheneinheit (4) das Intervall auf der Grundlage eines Messwertes korrigiert, der durch Messung einer Form der Schmelzperle erhalten wird.

3. Vorrichtung zur additiven Herstellung nach Anspruch 1 oder 2, wobei die Recheneinheit (4) einen Durchmesser des Laserstrahls bei Bestrahlung der Zuführposition mit dem Laserstrahl korrigiert, wobei die Zuführposition die zweite Position ist.

4. Vorrichtung zur additiven Herstellung nach einem der Ansprüche 1 bis 3, wobei die Recheneinheit (4) das Intervall auf der Grundlage einer Streuungsbreite des Laserstrahls von der ersten Schmelzperle bei Bestrahlung der Zuführposition mit dem Laserstrahl korrigiert, wobei die Zuführposition die zweite Position ist.

5. Vorrichtung zur additiven Herstellung nach einem der Ansprüche 1 bis 4, wobei das Baumaterial (7) ein Draht ist.

6. Vorrichtung zur additiven Herstellung nach einem der Ansprüche 1 bis 5, wobei die Recheneinheit (4) KS so berechnet, das eine Beziehung, die durch $KS + LD/2 \leq BW/2$ ausgedrückt wird, erfüllt ist, wobei BW die Breite der ersten Schmelzperle ist, LD ein Durchmesser des Laserstrahls ist und KS ein Bewegungsbetrag der Zuführposition von der ersten Position zur zweiten Position ist, wobei der Bewegungsbetrag ein Parameter ist, der das Intervall darstellt.

7. Verfahren zur additiven Herstellung, das von einer Vorrichtung (1) zur additiven Herstellung zum Aufbau einer Ablagerung auf einem Substrat (2) durchgeführt wird, wobei das Verfahren aufweist:

einen Schritt des Zuführens eines Baumaterials (7) zu einer Zuführposition;

einen Schritt des Bestrahlens der Zuführposition mit einem Laserstrahl, der das Baumaterial aufschmilzt;

einen Schritt des Durchführens der Steuerung zum Aufbau der Ablagerung durch Stapeln von Schmelzperlen, die durch die Bewegung der Zuführposition in Bezug auf das Substrat und Schmelzen des Baumaterials gebildet werden; und

einen Schritt des Ausführens eines Rechenprozesses zur Berechnung eines Parameters für die Steuerung, wobei

die Schmelzperlen zwei aufeinander gestapelte Schmelzperlen (22-1, 22-2) umfassen, wobei die zwei Schmelzperlen ein erste Schmelzperle (22-1) und eine auf der ersten Schmelzperle gestapelte zweite Schmelzperle (22-2) sind, wobei die erste Schmelzperle früher als die zweite Schmelzperle gebildet wird, wobei die Zuführposition bei der Bildung der ersten Schmelzperle eine erste Position (C1) ist, und die Zuführposition bei der Bildung der zweiten Schmelzperle eine zweite Position (C2) ist,

ein Intervall (KS) zwischen der ersten Position und der zweiten Position in einer vorgegebenen Richtung auf der Basis einer Breite (BW) der ersten Sicke und eines Durchmessers (LD) des Laserstrahls berechnet wird, wobei die vorgegebene Richtung eine Richtung der Breite der ersten Sicke ist, und

**dadurch gekennzeichnet, dass**

ein Intervall (KS) zwischen der ersten Position und der zweiten Position in einer vorgegebenen Richtung auf der Grundlage einer Breite (BW) der ersten Schmelzperle und eines Durchmessers (LD) des Laserstrahls berechnet wird, wobei die vorgegebene Richtung eine Richtung der Breite der ersten Schmelzperle ist, und

die Steuerung zum Einstellen der zweiten Position als eine von der ersten Position in der vorgegebenen Richtung um das Intervall verschobene Position so durchgeführt wird, dass ein Teil der zweiten Schmelzperle gegenüber der ersten Schmelzperle in der vorgegebenen Richtung herausragt.

8. Verfahren zur additiven Herstellung nach Anspruch 7, aufweisend:

einen Schritt des Aufbauens einer ersten Ablagerung durch Stapeln der Schmelzperlen, wenn die vorgegebene Richtung eine erste vorgegebene Richtung ist (A);

einen Schritt des Aufbauens einer zweiten Ablagerung, die sich in Richtung der ersten Ablagerung erstreckt, indem die Schmelzperlen gestapelt werden, wenn die vorgegebene Richtung eine zweite vorgegebene Richtung (B) ist; und

einen Schritt des Aufbauens einer einzigen Struktur durch Verbinden der ersten Ablagerung und der zweiten Ablagerung über dem Substrat.

**Revendications**

1. Appareil de fabrication additive (1) pour construire un dépôt sur un substrat (2), l'appareil comprenant:

une unité d'alimentation (6, 8) pour alimenter en un matériau de construction (7) une position d'alimentation;

une unité d'irradiation (10, 11, 12) pour exposer la position d'alimentation à un faisceau laser qui fait fondre le matériau de construction;

une unité de commande (3) pour effectuer une commande pour construire le dépôt en empilant des perles formées par déplacement de la position d'alimentation par rapport au substrat et en faisant fondre le matériau de construction; et

une unité arithmétique (4) pour exécuter une opération arithmétique de calcul de paramètres pour que l'unité de commande réalise la commande, dans lequel les perles incluent deux perles (22-1, 22-2) empilées l'une sur l'autre, les deux perles sont une première perle (22-1) et une deuxième perle (22-2) empilée sur la première perle, la première perle étant formée plus tôt que la deuxième perle, la position d'alimentation étant une première position (C1) dans la formation de la première perle, la position d'alimentation étant une deuxième position (C2) dans la formation de la deuxième perle,

**caractérisé en ce que** l'unité arithmétique calcule un intervalle (KS) entre la première position et la deuxième position dans une direction fixée, sur la base d'une largeur (BW) de la première perle et d'un diamètre (LD) du faisceau laser, la direction fixée étant une direction de la largeur de la première perle, et

l'unité de commande réalise une commande pour fixer la deuxième position à une position décalée par rapport à la première position dans la direction fixée, par l'intervalle, de manière à permettre à une partie de la deuxième perle de dépasser de la première perle dans la direction fixée.

2. Appareil de fabrication additive selon la revendication 1, dans lequel l'unité arithmétique (4) corrige l'intervalle sur une base d'une valeur de mesure obtenue par mesure d'une forme de la perle.

3. Appareil de fabrication additive selon la revendication 1 ou 2, dans lequel l'unité arithmétique (4) corrige un diamètre du faisceau laser dans l'exposition de la position d'alimentation au faisceau laser, la position d'alimentation étant la deuxième position.

**4.** Appareil de fabrication additive selon l'une quelconque des revendications 1 à 3, dans lequel l'unité arithmétique (4) corrige l'intervalle sur une base d'une largeur de propagation du faisceau laser à partir de la première perle dans l'exposition de la position d'alimentation au faisceau laser, la position d'alimentation étant la deuxième position.

**5.** Appareil de fabrication additive selon l'une quelconque des revendications 1 à 4, dans lequel le matériau de construction (7) est un fil.

**6.** Appareil de fabrication additive selon l'une quelconque des revendications 1 à 5, dans lequel l'unité arithmétique (4) calcule KS qui satisfait à une relation exprimée par KS + LD/2 ≤ BW/2, dans laquelle BW est la largeur de la première perle, LD est un diamètre du faisceau laser, et KS est une valeur de déplacement de la position d'alimentation de la première position jusqu'à la deuxième position, la valeur de déplacement étant un paramètre représentant l'intervalle.

**7.** Procédé de fabrication additive réalisé par un appareil de fabrication additive (1) pour former un dépôt sur un substrat (2), le procédé comprenant:

une étape d'alimentation en un matériau de construction (7) d'une position d'alimentation;
une étape d'exposition de la position d'alimentation à un faisceau laser qui fait fondre le matériau de construction;
une étape de réalisation d'une commande pour construire le dépôt en empilant des perles formées par déplacement de la position d'alimentation par rapport au substrat et en faisant fondre le matériau de construction; et
une étape d'exécution d'une opération arithmétique de calcul d'un paramètre pour la commande, dans lequel
les perles incluent deux perles (22-1, 22-2) empilées l'une sur l'autre, les deux perles sont une première perle (22-1) et une deuxième perle (22-2) empilée sur la première perle, la première perle étant formée plus tôt que la deuxième perle, la position d'alimentation étant une première position (C1) dans la formation de la première perle, la position d'alimentation étant une deuxième position (C2) dans la formation de la deuxième perle,
**caractérisé en ce qu'**un intervalle (KS) entre la première position et la deuxième position dans une direction fixée est calculé sur une base d'une largeur (BW) de la première perle et d'un diamètre (LD) du faisceau laser, la direction fixée étant une direction de la largeur de la première perle, et
une commande pour fixer la deuxième position à une position décalée par rapport à la première position dans la direction fixée, par l'intervalle, est réalisée de manière à permettre à une partie de la deuxième perle de dépasser de la première perle dans la direction fixée.

**8.** Procédé de fabrication additive selon la revendication 7, comprenant:

une étape de construction d'un premier dépôt en empilant les perles quand la direction fixée est une première direction fixée (A);
une étape de construction d'un deuxième dépôt s'étendant vers le premier dépôt en empilant les perles quand la direction fixée est une deuxième direction fixée (B); et
une étape de construction d'une structure unique en reliant le premier dépôt et le deuxième dépôt au-dessus du substrat.

# FIG.1

# FIG.2

# FIG.3

# FIG.4

# FIG.5

# FIG.6

KS

KP

22-1

22-2

22-1

22-n

2

2

2

A

# FIG.7

C2

LD

OH

22-2

KP

22-1

KS

2

C1

$\frac{BW}{2}$

BW

# FIG.8

```
          ┌─────────────┐
          │    START     │
          └──────┬──────┘
                 │
    ┌────────────▼────────────┐
    │ FORM BEAD ON SUBSTRATE   │ ~S1
    └────────────┬────────────┘
                 │
    ┌────────────▼─────────────────┐
    │ FORM NEXT BEAD ON BEAD WITH   │
    │ FEEDING POSITION COINCIDING   │
    │ WITH POSITION SHIFTED FROM    │ ~S2
    │ POSITION OF FORMED BEAD IN    │
    │      WIDTH DIRECTION          │
    └────────────┬─────────────────┘
                 │
              ╱──▼──╲   S3
           ╱   HAS    ╲
         ╱  WIDTH OF    ╲   NO
        ⟨  DEPOSIT OF    ⟩────►
         ╲ BEAD REACHED ╱
           ╲ SET WIDTH?╱
              ╲──┬──╱
                 │ YES
          ┌──────▼──────┐
          │     END      │
          └─────────────┘
```

# FIG.9

# FIG.10

# FIG.11

# FIG.12

# FIG.13

# FIG.14

NUMERICAL CONTROL DEVICE 3

MEMORY 102

PROCESSOR 101

DISPLAY 103

# FIG.15

ARITHMETIC DEVICE 4

MEMORY 112

PROCESSOR 111

DISPLAY 113

# FIG.16

$\dfrac{BWR}{2}$

OHR

22-1

22-2

22-1

22-3

2

...

2

2

# FIG.17

# FIG.18

# FIG.19

# FIG.20

# FIG.21

# FIG.22

# FIG.23

# FIG.24

MW   MD

38

39

# FIG.25

39   38

MT

# FIG.26

OH

33A-1   33A-2   33A-3

2

39   38

36

MP

# FIG.27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015160217 A
- US 5233150 A